# EUROPEAN PATENT APPLICATION

(11) **EP 2 863 517 A1**
(43) Date of publication of application: **22.04.2015**
(21) Application number: 13805118.0
(22) Date of filing: 12.06.2013
(51) Int. Cl.: H02K 1/27

(54) **EMBEDDED MAGNET TYPE ROTARY ELECTRIC MACHINE**

(30) Priority: 14.06.2012 JP 2012134450
(71) Applicant: Daikin Industries, Ltd., Osaka-shi, Osaka 530-8323 (JP)
(72) Inventor: KIFUJI, Nobuyuki, Kita-ku, Osaka-shi Osaka 530-8323 (JP); ASANO, Yoshinari, Kita-ku, Osaka-shi Osaka 530-8323 (JP); ARAKI, Shintarou, Kita-ku, Osaka-shi Osaka 530-8323 (JP)
(74) Representative: Hoffmann Eitle
(86) International application number: PCT/JP2013/066221
(87) International publication number: WO 2013/187439

(57) **Abstract**

Provided is an interior permanent magnet rotary electric machine having the structure which is hardly effected by the demagnetization caused by a magnetic field generated by an armature while increasing areas of magnetic pole faces of permanent magnets. A field element (2) has permanent magnets (22) embedded in a core (21) and extending in the axial direction parallel to a rotation axis (J). Both a magnetic pole face (22a) of the permanent magnet (22) close to an armature and a magnetic pole face (22b) away from the armature show arcs concaved toward an armature side. A radius (R2) of an arc shown by the magnetic pole face (22b) is larger than a radius (R1) of an arc shown by the magnetic pole face (22a). Further, a focal point (P2) of the arc shown by the magnetic pole face (22b) is further away from the permanent magnet (22) than a focal point (P1) of the arc shown by the magnetic pole face (22a). Also, the focal points (P1, P2) and the rotation axis (J) are arranged on one straight line as viewed from the axial direction.

## Description

### Technical Field

The present invention relates to a so-called interior permanent magnet rotary electric machine where a permanent magnet is embedded in a field element.

### Background Art

An interior permanent magnet rotary electric machine is a desirable rotary electric machine from a view point that so-called reluctance torque is used. With respect to a permanent magnet embedded in a field element of the interior permanent magnet rotary electric machine, various shapes including shapes exemplified in the following Patent documents 1 to 4 have been proposed.

In an embedded type rotary electric machine, to increase a field magnetic flux so as to increase an output of the embedded type rotary electric machine, it is desirable to increase a surface area of a magnetic pole face of a permanent magnet which generates the field magnetic flux. To satisfy such a request, it is desirable that a shape of the magnetic pole face of the permanent magnet is concaved toward an armature as viewed from the direction parallel to a rotation axis which is the center of rotation of the rotary electric machine. Such a shape is described in Patent documents 3, 4, for example.

Patent documents 3, 4 also exemplify a manufacturing method when a resin magnet is used as the permanent magnet.

### Prior Art Documents

### Patent Documents

Patent Document 1: International Publication No. 2008/114692
Patent Document 2: Japanese Patent Application Laid-Open No. 2011-91911
Patent Document 3: Japanese Patent Application Laid-Open No. 11-206075 (1999)
Patent Document 4: Japanese Patent Application Laid-Open No. 2003-47212

### Summary of Invention

### Problems to be Solved by the Invention

There may be a case where a magnetic field generated by an armature winding (hereinafter referred to as "armature magnetic field") is applied in the direction that a permanent magnet is demagnetized. Particularly as in the case described above where the magnetic pole face of the permanent magnet exhibits a concaved shape with respect to the armature, both ends of the permanent magnet are disposed closer to the armature than a center portion of the permanent magnet and hence, both ends of the permanent magnet are liable to be demagnetized.

When the armature magnetic field is large, there may be a case where the demagnetization of permanent magnet reaches irreversible demagnetization. In this case, the indentation of the magnetic pole face toward the armature for increasing an output of the embedded type rotary electric machine by increasing the magnetic pole face of the permanent magnet impedes the improvement of an output of the embedded type rotary electric machine to the contrary.

In view of the above-mentioned points, it is an object of the present invention to provide an interior permanent magnet rotary electric machine having the structure which makes the effects of the demagnetization caused by an armature magnetic field difficult while increasing areas of the magnetic pole faces of the permanent magnet.

### Means for Solving the Problems

An interior permanent magnet rotary electric machine according to the present invention includes: an armature (1, 19); and a field element (2, 29) rotating relative to the armature about a rotation axis (J) which constitutes the center of rotation.

According to the first aspect of the present invention, the field element includes: a core (21); and a plurality of permanent magnets (22, 221, 222, 223, 229) extending in the axial direction which is the direction parallel to the rotation axis and embedded in the core. Each of the plurality of permanent magnets has a pair of magnetic pole faces (22a, 22b, 221a, 221b, 222a, 222b, 223a, 223b, 229a, 229b) which show arcs concaved toward the armature as viewed from the axial direction. A radius (R2, R4, R6, R29) of a second arc which is the arcs shown by the magnetic pole face (22b, 221b, 222b, 223b, 229b) away from the armature out of the pair of magnetic pole faces is larger than a radius (R1, R3, R5, R19) of a first arc which is the arcs shown by the magnetic pole face (22a, 221a, 222a, 223a, 229a) close to the armature out of the pair of magnetic pole faces, in the each of the plurality of permanent magnets. A focal point (P2, P4, P6, P29) of the second arc is further away from the permanent magnet than a focal point (P1, P3, P5, P 19) of the first arc. Alternatively, the focal point of the second arc is closer to the permanent magnet than a focal point of the first arc. The focal point of the first arc, the focal point of the second arc and the rotation axis in the each of the plurality of permanent magnets are arranged on one straight line as viewed from the axial direction.

A second aspect of the interior permanent magnet rotary electric machine according to the present invention is, in the first aspect of the interior permanent magnet rotary electric machine, characterized in that the field element (2) further includes a magnetic barrier (23) mounted on an end portion different from the pair of magnetic pole faces in one of the plurality of permanent magnets.

A third aspect of the interior permanent magnet rotary electric machine according to the present invention is, in the second aspect of the interior permanent magnet rotary electric machine, characterized in that a length (23c) formed by the magnetic barrier at a position remotest from the end portion and a side surface (210) of the core closest to the armature (1) is smaller than a width (22d) on the one straight line in the one of the plurality of permanent magnets.

A fourth aspect of the interior permanent magnet rotary electric machine according to the present invention is, in any one of the first to fourth aspects of the interior permanent magnet rotary electric machine, characterized in that the plurality of permanent magnets include a plurality of permanent magnets (221, 222, 223) stacked between the rotation axis and the armature.

A fifth aspect of the interior permanent magnet rotary electric machine according to the present invention is, in any one of the first to fourth aspects of the interior permanent magnet rotary electric machine, characterized in that the plurality of permanent magnets are formed of resin magnets.

A sixth aspect of the interior permanent magnet rotary electric machine according to the present invention is, in the fifth aspect of the interior permanent magnet rotary electric machine, characterized in that a magnetization magnetic flux supplied from the outside for obtaining the resin magnet at the time of forming the resin magnets by injection molding is set parallel to the one straight line as viewed from the axial direction.

A seventh aspect of the interior permanent magnet rotary electric machine according to the present invention is, in the fifth aspect of the interior permanent magnet rotary electric machine, characterized in that the resin magnets are formed by injection molding, and have anisotropy such that the thickness direction of the permanent magnet becomes the magnetization easy axis.

An eighth aspect of the interior permanent magnet rotary electric machine according to the present invention is, in any one of the first to seventh aspects of the interior permanent magnet rotary electric machine, characterized in that the armature (1) has an armature winding (12) wound by concentrated winding.

### Effects of the Invention

According to the first aspect of the interior permanent magnet rotary electric machine of the present invention, the magnetic pole face of the permanent magnet is concaved toward the armature setting the thickness of the permanent magnet such that the thickness is large in the vicinity of end portions which differ from the pair of magnetic pole faces and the thickness of the permanent magnet is thin in the vicinity of the center of the permanent magnet. Thus, the effect of demagnetization caused by the armature magnetic field is decreased while increasing an area of the magnetic pole face of the permanent magnet and, a volume of the magnet is reduced.

According to the second aspect of the interior permanent magnet rotary electric machine of the present invention, it is possible to prevent a magnetic flux from flowing in a short-circuited manner between the pair of magnetic pole faces of the permanent magnet.

According to the third aspect of the interior permanent magnet rotary electric machine of the present invention, it is possible to prevent a magnetic barrier from impairing advantageous effects brought about by the first aspect of the interior permanent magnet rotary electric machine when the rotary electric machine is stopped.

According to the fourth aspect of the interior permanent magnet rotary electric machine of the present invention, reluctance torque of the rotary electric machine is increased.

According to the fifth aspect of the interior permanent magnet rotary electric machine of the present invention, it is easy to provide the permanent magnet in the core by injection molding.

According to the sixth aspect of the interior permanent magnet rotary electric machine of the present invention, magnetization in the vicinity of the center of the permanent magnet is ensured.

According to the seventh aspect of the interior permanent magnet rotary electric machine of the present invention, residual magnetic flux density in the vicinity of the armature out of the pair of magnetic pole faces is increased so that it is easy to increase a field magnetic flux.

According to the eighth aspect of the interior permanent magnet rotary electric machine of the present invention, it is resist to the demagnetization even at the armature which adopts concentrated winding by which demagnetization of the permanent magnet is liable to be generated.

Objects, technical features, modes and advantages of the present invention will become apparent by the detailed explanation made hereinafter and attached drawings.

### Brief Description of Drawings

[Fig. 1] A cross-sectional view showing the constitution of a rotary electric machine according to a first embodiment.
[Fig. 2] A cross-sectional view showing the constitution of a conventional field element.
[Fig. 3] A cross-sectional view showing the constitution of a field element of a rotary electric machine according to the first embodiment.
[Fig. 4] A cross-sectional view showing the constitution of a field element of a rotary electric machine according to a second embodiment.
[Fig. 5] A cross-sectional view showing the constitution of the field element of the rotary electric machine according to the second embodiment.
[Fig. 6] A cross-sectional view showing the constitution of the field element of the rotary electric machine according to the second embodiment.
[Fig. 7] A cross-sectional view showing the constitution of the field element of the rotary electric machine according to the second embodiment.
[Fig. 8] A cross-sectional view showing the constitution of a rotary electric machine according to a fourth embodiment.
[Fig. 9] A cross-sectional view showing the constitution of a field element of a rotary electric machine according to a fifth embodiment.

### Description of Embodiments

### First embodiment

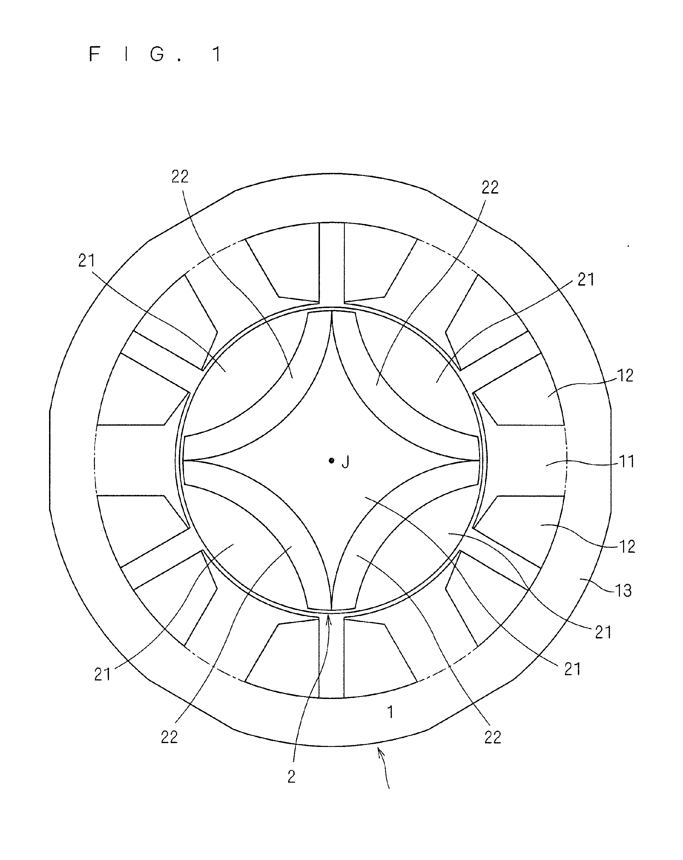

Referring to Fig. 1, a rotary electric machine according to the first embodiment is a so-called inner rotor type rotary electric machine where the rotary electric machine includes a field element 2, and an armature 1 which surrounds the field element 2. The field element 2 rotates relative to the armature 1 about a rotation axis J which constitutes the center of rotation. Fig. 1 is a cross-sectional view taken on a plane perpendicular to the rotation axis J as viewed in the direction parallel to the rotation axis (hereinafter, referred to as "axial direction").

The field element 2 includes a core 21 and a plurality of permanent magnets 22 which are embedded in the core 21. The permanent magnets 22 extend in the axial direction (in the direction perpendicular to a surface of paper in Fig. 1). Each permanent magnet 22 is concaved toward the armature 1 as viewed in the axial direction.

The armature 1 has teeth 11, an armature winding 12 and a yoke 13. The yoke 13 connects the teeth 11 on a side opposite to the field element 2.

The armature winding 12 is wound around the teeth 11 by concentrated winding. When the armature 1 adopts such concentrated winding, a demagnetization effect becomes conspicuous for the field element 2.

In this specification, unless otherwise specified, the armature winding 12 does not mean the individual conductive wires which constitute the armature winding 12 but means collective conducive wires in a mode where the conductive wires are wound in a bundle. It is also applied to attached drawings. Lead lines on a winding start side and lead lines on a winding finish side, and connecting them is also omitted from the drawing.

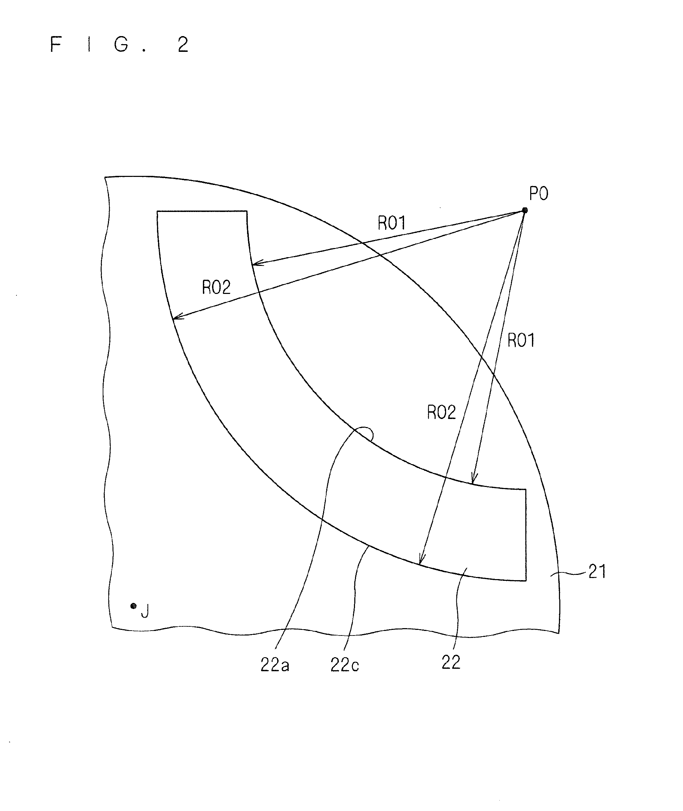

Fig. 2 shows the structure of a conventional field element for reference. In Fig. 2, however, only a portion of the cross section of the structure perpendicular to the axial direction is shown. A permanent magnet 22 is embedded in a core 21, a magnetic pole face 22a close to an armature (not shown in the drawing: see Fig. 1) and a magnetic pole face 22c away from the armature each has an arc. As described previously, it is for the sake of increasing areas of the magnetic pole faces.

To be more specific, a radius R02 of an arc shown by the magnetic pole face 22c is larger than a radius R01 of an arc shown by the magnetic pole face 22a as viewed in the axial direction, and both focal points of these arcs are set at a focal point P0. That is, the magnetic pole faces 22a, 22b respectively show the arcs which are portions of concentric circles as viewed in the axial direction. Accordingly, a distance between the magnetic pole faces 22a, 22b, that is, a thickness of the permanent magnet 22 (R02 - R01) becomes uniform.

Of course, the difference between radii (R02-R01) can be increased so as to make the demagnetization caused by the armature difficult. However, the demagnetization of the permanent magnet 22 in the vicinity of the center of the arc is not so large as that of both ends of the arc. Accordingly, the mere increase of the difference between the radii (R02-R01) excessively increases the volume of the permanent magnet 22 thus impeding the effective use of the permanent magnet 22.

In view of the above, in the first embodiment, the thickness of the permanent magnet 22 is small at the substantially center of the arc and large at both end portions of the arc.

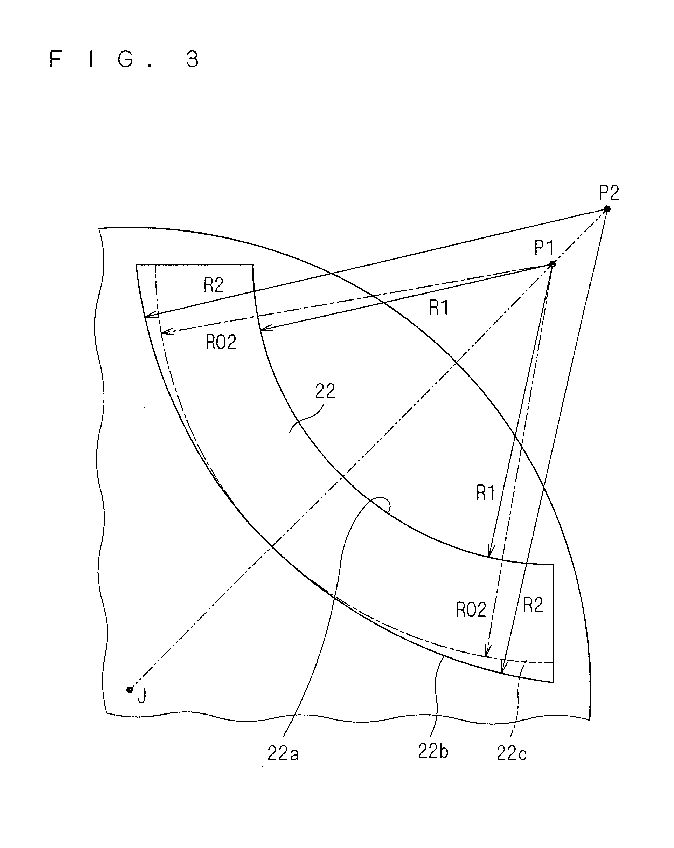

Fig. 3 shows the constitution of the field element of the rotary electric machine according to the first embodiment. In Fig. 3, only a portion of a cross section perpendicular to the axial direction is shown. Although the description is made with respect to only one permanent magnet 22, all permanent magnets 22 shown in Fig. 1 adopt the substantially same constitution.

Hereinafter, the positional relationship of the respective parts as viewed in the axial direction is described. The permanent magnet 22 has a pair of magnetic pole faces 22a 22b both of which show arcs. Further, a radius R2 of the arc shown by the magnetic pole face 22b away from the armature (not shown in the drawing: see Fig. 1) is larger than a radius R1 of the arc shown by the magnetic pole face 22a close to the armature. A focal point P2 of the arc shown by the magnetic pole face 22b is further away from the permanent magnet 22 than a focal point P1 of the arc shown by the magnetic pole face 22a. In other words, the focal point P1 is closer to the permanent magnet 22 than the focal point P2. Further, the focal points P1, P2, and the rotation axis J are arranged on one straight line (indicated by a double-dashed chain line in Fig. 3).

For a comparison purpose, the magnetic pole face 22c and the radius R02 of the arc shown by the magnetic pole face 22c shown in Fig. 2 are also indicated by a chain line in Fig. 3. The focal point P0, the radius R01, and the magnetic pole face 22a in Fig. 2 respectively correspond to the focal point P1, the radius R1, and the magnetic pole face 2a in Fig. 3.

As is clearly understood from Fig. 3, the thickness of the permanent magnet 22 is increased as leaving from the center portion of the arc, to be more specific, as the portion of the permanent magnet 22 is further away from a straight line which connects the focal points P1, P2 and the rotation axis J. In other words, the permanent magnet 22 has a small thickness in the vicinity of the center of the arc, and has a large thickness at both ends of the arc.

In this manner, the magnetic pole faces 22a, 22b of the permanent magnet 22 are concaved toward the armature 1, and the thickness of the permanent magnet 22 is set thin in the vicinity of center of the arc while the thickness in the vicinity of end portions (that is, both ends of the arc) which are different from the magnetic pole faces 22a, 22b is set thick. Thus, the permanent magnet 22 is hardly effected by the demagnetization caused by an armature magnetic field while increasing areas of the magnetic pole faces 22a, 22b. Further, the permanent magnet 22 is reduced in the volume and is effectively used.

### Second embodiment

Permanent magnets embedded in a field element 2 may be stacked on each other between a rotation axis J and an armature 1.

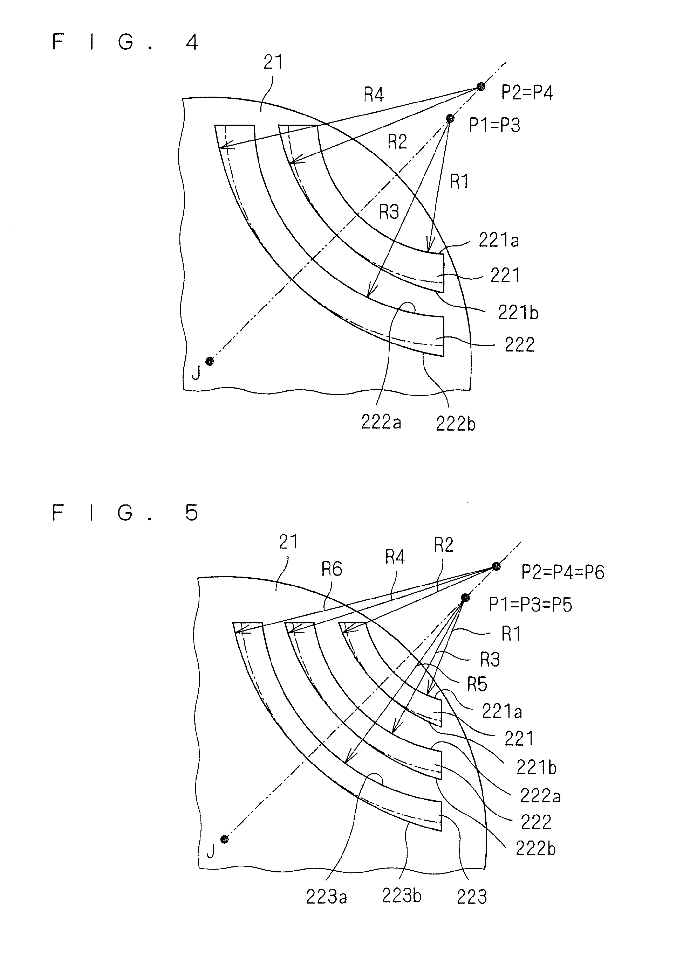

Fig. 4, Fig. 6 and Fig. 7 correspond to Fig. 3, wherein the constitution where a plurality of permanent magnets 221, 222 are layered is adopted. Fig. 5 also corresponds to Fig. 3, wherein the constitution where a plurality of permanent magnets 221, 222, 223 are layered is adopted. In this manner, by embedding permanent magnets in plural layers in a core 21 in a stacked manner, reluctance torque of a rotary electric machine is increased.

Magnetic pole faces similar to shapes as the permanent magnet 22 of the first embodiment are shown on all permanent magnets 221, 222, 223. Hereinafter, to describe the positional relationship viewed in the axial direction specifically, the permanent magnet 221 has a pair of magnetic pole faces 221 a, 221 b both of which show arcs. A radius R2 of an arc shown by the magnetic pole face 221 b away from an armature (not shown in the drawing: see Fig. 1) is larger than a radius R1 of an arc shown by the magnetic pole face 221 a closer to the armature. A focal point P2 of the arc shown by the magnetic pole face 221b is further away from the permanent magnet 221 than a focal point P1 of the arc shown by the magnetic pole face 221a (in other words, the focal point P1 is closer to the permanent magnet 221 than the focal point P2). In the same manner, a radius R4 of an arc shown by a magnetic pole face 222b away from the armature is larger than a radius R3 of an arc shown by a magnetic pole face 222a closer to the armature. A focal point P4 of the arc shown by the magnetic pole face 222b is further away from the permanent magnet 222 than a focal point P3 of the arc shown by the magnetic pole face 222a (in other words, the focal point P3 is closer to the permanent magnet 222 than the focal point P4). To further describe the permanent magnet 223 by reference to Fig. 5, a radius R6 of an arc shown by a magnetic pole face 223b away from the armature is larger than a radius R5 of an arc shown by a magnetic pole face 223a closer to the armature. A focal point P6 of the arc shown by the magnetic pole face 223b is further away from the permanent magnet 223 than a focal point P5 of the arc shown by the permanent magnet 223a (in other words, the focal point P5 is closer to the permanent magnet 223 than the focal point P6). The focal points P1, P2, P3, P4, P5, P6 and the rotation axis J are arranged on one straight line (indicated by a double-dashed chain line in Fig. 4 and Fig. 5).

For a reference purpose, the respective shapes of permanent magnets 221, 222, 223, having the uniform thickness in the same manner as the permanent magnet 22 shown in Fig. 2, are indicated by a chain line.

Also in this case, due to the similar action in the first embodiment, the permanent magnets 221, 222, 223 are hardly effected by the demagnetization caused by a magnet field of an armature while increasing areas of the magnetic pole faces. Further, respective the permanent magnets 221, 222, 223 are decreased in the volume and are effectively utilized.

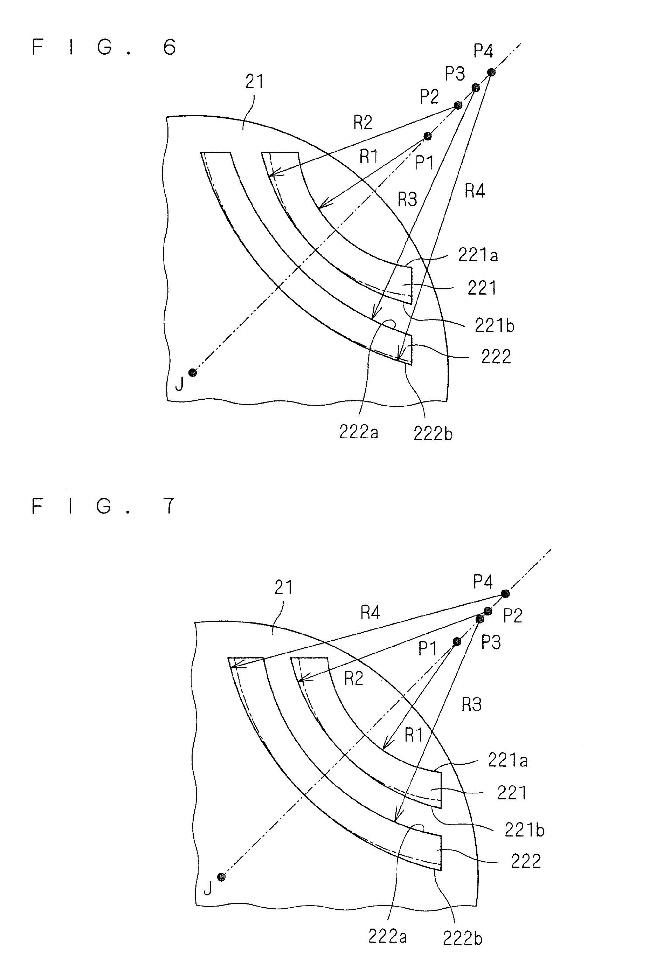

Fig. 4 exemplifies the case where the focal points P1, P3correspond, and the focal points P2, P4 correspond. However, as shown in Fig. 6 and Fig. 7, these focal points may not correspond. Although not shown in the drawing, the focal point P1 may be further away from the rotation axis J than the focal point P3, or the focal point P2 may be further away from the rotation axis J than the focal point P4. It is because that, also in these modifications, the permanent magnets 221, 222 maintain the shapes where the thickness is thin at the center and is large at both ends, and so long as such shapes are maintained, it is possible to reduce required volumes of the permanent magnets while suppressing the effect of the demagnetization.

Also in Fig. 5, the case where the focal points P1, P3, P5correspond, and the focal points P2, P4, P6 correspond is exemplified. However, these correspondences are not always necessary.

### Third embodiment

The permanent magnets 22, 221, 222, 223 having shapes described in the first embodiment and the second embodiment can be formed by a known method, for example, using a resin magnet disclosed in Patent documents 3, 4. With the use of the resin magnet, the permanent magnets 22, 221, 222, 223 are easily formed in the core 21 by injection molding. The resin magnet is also referred to as a bond magnet.

In injection molding for the resin magnet, it is desirable that a magnetization magnetic flux supplied from the outside for forming the resin magnet be arranged parallel to a straight line on which the rotation axis J and the focal points P1, P2, ... are arranged as viewed in the axial direction. It is for surely providing the magnetization in the vicinity of the center of the permanent magnet (that is, near the straight line).

It is preferable that the injection molded resin magnet has anisotropy where a magnetization easy axis of a resin magnet is directed in the thickness direction of the permanent magnets 22, 221, 222, 223. For example, it is preferable that a magnetization easy axis of a resin magnet which is adopted as the permanent magnet 22 be arranged perpendicular to the arc shown by the magnetic pole face 22a of the permanent magnet 22 on an armature side. Since the resin magnet has such anisotropy, even when there is the disturbance in the magnetization magnetic flux, the residual magnetic flux density of the magnetic pole face 22a on an armature side is increased and hence, a field magnetic flux is easily increased. The same goes for the permanent magnets 221, 222, 223.

### Fourth embodiment

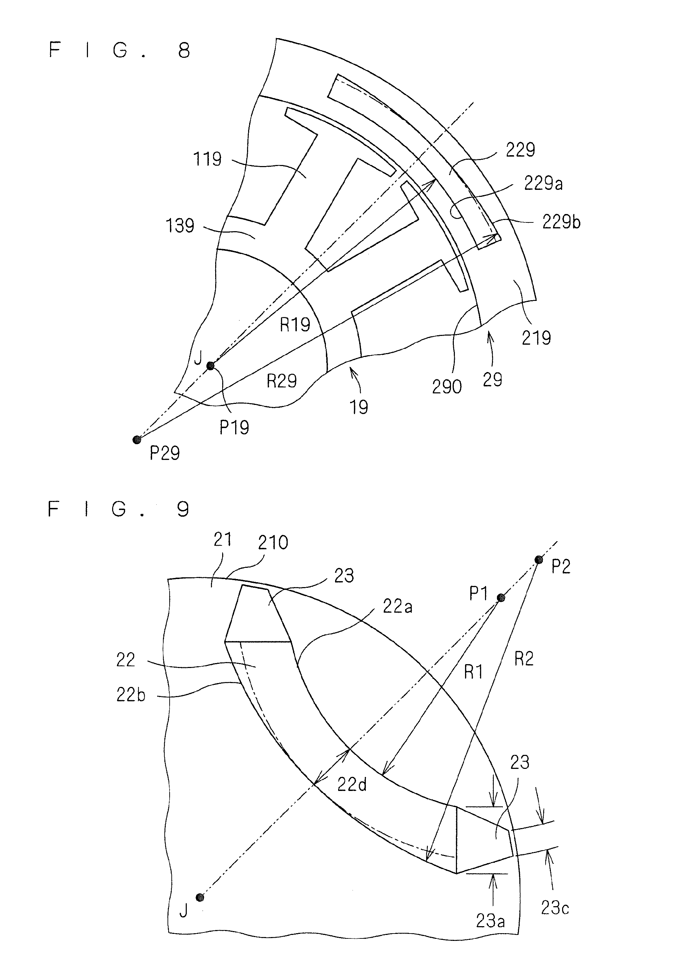

Fig. 8 shows the constitution of a rotary electric machine according to a fourth embodiment, and only a portion of the cross section perpendicular to the axial direction is shown. In the fourth embodiment, a so-called outer-rotor-type rotary electric machine is described.

In this embodiment, a case is exemplified where a field element 29 includes a core 219 and permanent magnets 229, and an armature 19 includes teeth 119 and a yoke 139. The armature 19 is surrounded by the field element 29, and the yoke 139 connects the teeth 119 on a rotation axis J side.

Also in such an outer-rotor-type rotary electric machine, the shape of the permanent magnet 229 is described in the same manner as the first embodiment. That is, to describe the positional relationship as viewed in the axial direction, each permanent magnet 229 has a pair of magnetic pole faces 229a, 229b having an arc. A radius R29 of an arc shown by the magnetic pole face 229b away from the armature 19 is larger than a radius R19 of an arc shown by the magnetic pole face 229a closer to the armature 19. A focal point P29 of the arc shown by the magnetic pole face 229b is further away from the permanent magnet 229 than a focal point P19 of the arc shown by the magnetic pole face 229a (in other words, the focal point P19 is closer to the permanent magnet 229 than the focal point P29). Further, the focal points P19, P29 and the rotation axis J are arranged on one straight line (indicated by a double-dashed chain line in Fig. 8). In this embodiment, the case where the focal point P19 correspond to the rotation axis J is exemplified.

For a reference purpose, the case where the shape of the permanent magnet 229 which has the uniform thickness is also described in Fig. 8 by a chain line.

As described above, also in the outer-rotor-type rotary electric machine, due to the similar action in the first embodiment, the permanent magnet 229 is hardly effected by the demagnetization caused by a magnet field of the armature while increasing areas of the magnetic pole faces. Further, the permanent magnet 229 is decreased in the volume and hence, they are effectively utilized.

As a matter of course, the permanent magnet 229 according to the fourth embodiment is also formed in the same manner as the injection molding of the resin magnet in the third embodiment.

### Fifth embodiment

Fig. 9 shows the constitution of a field element of a rotary electric machine according to the fifth embodiment. Fig. 9 corresponds to Fig. 3 showing the first embodiment. Here, the case where the permanent magnet 22 has the uniform thickness is also described by a chain line.

In this embodiment, the field element 2 (see Fig. 1) further includes magnetic barriers 23 formed on end portions of the permanent magnet 22 which are different from magnetic pole faces 22a, 22b. The magnetic barrier 23 is a hole which penetrates in the axial direction, for example, and prevents a magnetic flux from flowing between the magnetic pole faces 22a, 22b of the permanent magnet 22 in a short-circuited manner.

To prevent the concentration of an armature magnetic field on both ends of the permanent magnet 22, it is preferable that the armature magnetic field flows through the magnetic barriers 23 more easily than the permanent magnet 22.

To be more specific, it is preferable that a length 23c of a portion which is formed by the magnetic barrier 23 at a position furthest away from an end portion of the permanent magnet 22 and a side surface 210 of a core 21 closest to the armature 1 (can be also regarded as a side surface away from the rotation axis J in the case of the inner-rotor-type rotary electric machine) be smaller than a width 22d of the permanent magnet 22. Here, the width 22d is a width (thickness) of the permanent magnet 22 on a straight line which connects the rotation axis J and focal points P1, P2, and is a minimum value of the thickness of the permanent magnet 22.

Usually, the permanent magnet 22 per se has magnetic permeability to an extent that the magnetic barrier 23 has. Accordingly, when the thickness of the magnetic barrier 23 is larger than the thickness of the permanent magnet 22, the armature magnetic field avoids the magnetic barrier 23 and is liable to pass through the permanent magnet 22. Particularly, the magnetic barriers 23 are provided to the end portions of the permanent magnet 22 where the demagnetization is to be taken into consideration and hence, it is not desirable that a magnetic resistance of the magnetic barrier 23 as a path of the armature magnetic field becomes higher than that of the permanent magnet 22. This issue becomes apparent particularly when the rotary electric machine is in a stopped state.

Accordingly, it is preferable that the core 21 remains on a more armature 1 side than the magnetic barrier 23 with the length 23c smaller than the minimum value (width 22d) of the thickness of the permanent magnet 22.

To prevent a magnetic flux from flowing in a short-circuited manner between the magnetic pole faces 22a, 22b, a width 23a of the magnetic barrier 23 on a permanent magnet 22 side is selected to be substantially equal to or more than a width of the permanent magnet 22 at both ends. As described above, in all embodiments, the thickness of the permanent magnet 22 at both ends is larger than the thickness 22d at the center. Accordingly, the length 23c becomes shorter than the width 23a.

As a matter of course, in the same manner as the fifth embodiment, the magnetic barrier 23 can be also provided to end portions of the permanent magnet 229 which are different from the magnetic pole faces 229a, 229b are respectively formed according to the fourth embodiment. In this case, a side surface 290 of the core 219 closer to the rotation axis J becomes a side surface closer to the armature 19 and corresponds to the above-mentioned side surface 210.

Although the present invention has been described in detail heretofore, the above description is provided merely for an exemplifying purpose in all aspects and hence, the present invention is not limited by the description. It is construed that various modifications which are not exemplified here are conceivable without departing from the scope of the present invention.

## Claims

1. An interior permanent magnet rotary electric machine comprising:
an armature (1, 19); and
a field element (2, 29) rotating relative to said armature about a rotation axis (J) which constitutes the center of rotation, wherein
said field element includes a core (21) and a plurality of permanent magnets (22, 221, 222, 223, 229) extending in the axial direction which is the direction parallel to said rotation axis and embedded in said core,
each of said plurality of permanent magnets has a pair of magnetic pole faces (22a, 22b, 221a, 221b, 222a, 222b, 223a, 223b, 229a, 229b) which show arcs concaved toward said armature as viewed from said axial direction,
a radius (R2, R4, R6, R29) of a second arc which is said arcs shown by the magnetic pole face (22b, 221b, 222b, 223b, 229b) away from said armature out of said pair of magnetic pole faces is set larger than a radius (R1, R3, R5, R19) of a first arc which is said arcs shown by the magnetic pole face (22a, 221a, 222a, 223a, 229a) close to said armature out of said pair of magnetic pole faces, and a focal point (P2, P4, P6, P29) of said second arc is further away from said permanent magnet than a focal point (P1, P3, P5, P19) of said first arc is, in said each of said plurality of permanent magnets and
said focal point of said first arc, said focal point of said second arc and said rotation axis in said each of said plurality of permanent magnets are arranged on one straight line as viewed from said axial direction.

2. An interior permanent magnet rotary electric machine comprising:
an armature (1, 19); and
a field element (2, 29) rotating relative to said armature about a rotation axis (J) which constitutes the center of rotation, wherein
said field element includes a core (21) and a plurality of permanent magnets (22, 221, 222, 223, 229) extending in the axial direction which is the direction parallel to the rotation axis and embedded in said core,
each of said plurality of permanent magnets has a pair of magnetic pole faces (22a, 22b, 221 a, 221 b, 222a, 222b, 223a, 223b, 229a, 229b) which show arcs concaved toward said armature as viewed from said axial direction,
a radius (R2, R4, R6, R29) of a second arc which is said arcs shown by the magnetic pole face (22b, 221 b, 222b, 223b, 229b) away from said armature out of said pair of magnetic pole faces is larger than a radius (R1, R3, R5, R19) of a first arc which is said arcs shown by the magnetic pole face (22a, 221a, 222a, 223a, 229a) close to said armature out of said pair of magnetic pole faces, and that a focal point (P1, P3, P5, P19) of said first arc is closer to said permanent magnet than a focal point (P2, P4, P6, P29) of said second arc, in said each of said plurality of permanent magnets and
said focal point of said first arc, said focal point of said second arc and said rotation axis in said each of said plurality of permanent magnets are arranged on one straight line as viewed from said axial direction.

3. The interior permanent magnet rotary electric machine according to claim 1 or 2, wherein said field element (2) further includes a magnetic barrier (23) mounted on an end portion different from said pair of magnetic pole faces in one of said plurality of permanent magnets.

4. The interior permanent magnet rotary electric machine according to claim 3, wherein a length (23c) formed by said magnetic barrier at a position farthest away from said end portion and a side surface (210) of said core closest to said armature (1) is smaller than a width (22d) on said one straight line in said one of said plurality of permanent magnets.

5. The interior permanent magnet rotary electric machine according to claim 1 or 2, wherein said plurality of permanent magnets include a plurality of permanent magnets (221, 222, 223) stacked between said rotation axis and said armature.

6. The interior permanent magnet rotary electric machine according to claim 1 or 2, wherein said plurality of permanent magnets are formed of resin magnets.

7. The interior permanent magnet rotary electric machine according to claim 6, wherein a magnetization magnetic flux supplied from the outside for obtaining said resin magnets in forming said resin magnets by injection molding is set parallel to said one straight line as viewed from said axial direction.

8. The interior permanent magnet rotary electric machine according to claim 6, wherein said resin magnets are formed by injection molding, and have anisotropy such that the thickness direction of said permanent magnet becomes the magnetization easy axis.

9. The interior permanent magnet rotary electric machine according to claim 1 or 2, wherein said armature (1) has an armature winding (12) wound by concentrated winding.
